Europäisches Patentamt

European Patent Office

Office européen des brevets

(11) Veröffentlichungsnummer: **0 226 063**
**B1**

(12) **EUROPÄISCHE PATENTSCHRIFT**

(45) Veröffentlichungstag der Patentschrift:
**10.01.90**

(21) Anmeldenummer: **86116072.9**

(22) Anmeldetag: **20.11.86**

(51) Int. Cl.⁴: **C08L 27/06**
// (C08L27/06,
25:02),(C08L27/06,
33:12),(C08L27/06, 33:18)

(54) Formmassen auf der Basis von Vinylchloridpolymerisaten mit verbesserter Verarbeitbarkeit.

(30) Priorität: **30.11.85 DE 3542469**

(43) Veröffentlichungstag der Anmeldung:
**24.06.87 Patentblatt 87/26**

(45) Bekanntmachung des Hinweises auf die Patenterteilung:
**10.01.90 Patentblatt 90/2**

(84) Benannte Vertragsstaaten:
**DE ES FR GB IT**

(56) Entgegenhaltungen:
**EP-A- 0 159 689**

(73) Patentinhaber: **BAYER AG,
D-5090 Leverkusen 1 Bayerwerk(DE)**

(72) Erfinder: **Eichenauer, Herbert, Dr., Goethestrasse 71,
D-4047 Dormagen(DE)**
Erfinder: **Lindner, Christian, Dr., Riehler Strasse 200,
D-5000 Köln 60(DE)**
Erfinder: **Ott, Karl-Heinz, Dr., Paul-Klee-Strasse 54,
D-5090 Leverkusen(DE)**
Erfinder: **Braese, Hans-Eberhard,
Käthe-Kollwitz-Strasse 3, D-5000 Köln 71(DE)**

**Beschreibung**

Vinylchloridpolymerisate (insbesondere Polyvinylchlorid) stellen weitverbreitete Rohstoffe zur Herstellung verschiedenster Kunststoffartikel dar; durch Kombination der Vinylchloridpolymerisate mit anderen Stoffen läßt sich bekannterweise das charakteristische Eigenschaftsprofil der Vinylchloridpolymerisate in weiten Bereichen variieren bzw. modifizieren: Während sich z.B. un- bzw. gering modifiziertes Polyvinylchlorid (sogenanntes "Hart-PVC") insbesondere zur Herstellung von Formkörpern eignet, die ein mittleres Verarbeitungsverhalten, mittlere Wärmeformbeständigkeit bei mäßiger Zähigkeit und relativ niedriger Flexibilität aufweisen, lassen sich durch Weichmachern mit niedrigen bzw. mittleren Molekulargewichten Kunststoffartikel herstellen ("Weich-PVC"), die bei Gebrauchstemperaturen hohe Flexibilität und Elastizität besitzen; geeignete Weichmacher sind z.B. Phthalate, Epoxidverbindungen, aliphatische Diester, Phosphate, Polyester mit Molekulargewichten bis etwa 3000, Trimellitate, Citrate oder bestimmte aliphatische, gegebenenfalls chlorierte, Kohlenwasserstoffe; diese Weichmacher sind bekannt (vgl. "Encyclopedia of PVC", Mariel Dekker, INC, New York, 1976), Mischmengen aus sogenannten polymeren Weichmacheren (Polymere mit höheren Molekulargewichten) mit Vinylchloridpolymerisaten erlauben außerdem die Herstellung von "Weich-PVC"-Formkörpern mit verbesserten mechanischen Eigenschaften (z.B. verbesserte Abriebfestigkeit, Elastizität, Lösungsmittelbeständigkeit und Flammfestigkeit); bekannte Polymer-Weichmacher sind z.B. teilvernetzte Butadien-Acrylnitril-Copolymerisate (z.B. mit ca. 29 % Acrylnitril, Mooney-Viskositäten [ML 4, 100°C, DIN 53 523] von 60 bis 100) vgl. EP 5 736, bestimmte Polyurethane (vgl. DE-OS 1 193 241) sowie spezielle, in organischen Lösungsmitteln lösliche Ethylen-Vinylacetat-Copolymerisate (vgl. EP 5 736).

Durch Kombination von Vinylchloridpolymerisaten mit Pfropfpolymeren von Styrol, α-Methylstyrol, Acrylnitril, Methylmethacrylat oder Mischungen daraus auf Kautschuke wie Butadienpolymerisate und Acrylatkautschuke, oder mit Pfropfpolymerisaten von Vinylchlorid auf spezielle Ethylen-Vinylacetat-Copolymere (z.B. mit 45 % Vinylacetat und 55 % Ethylen) oder andere Polyethylenderivate lassen sich Kunststoffblends hoher Kerbschlagzähigkeit erhalten; dabei müssen die Kautschuke in den Pfropfpolymerisaten verschieden sein von den Kautschuken, die gegebenenfalls gleichzeitig als Polymerweichmacher eingesetzt werden; verschieden bezieht sich hier auf die chemische Zusammensetzung, die Vernetzungscharakteristik, die Teilchenmorphologie, die Pfropfcharakteristik und Dosierung im Vinylchloridpolymerisat.

Es gibt auch spezielle Modifikatoren, die die Wärmestandfestigkeit von Vinylchloridpolymerisaten verbessern, z.B. bestimmte Copolymere von Styrol, α-Methylstyrol, Acrylnitril, Methylmethacrylat.

Um Polymerkombinationen dieser Art technisch verarbeiten zu können, ist eine wirksame Stabilisierung erforderlich, z.B. gegen thermischen, photolytischen und chemischen Abbau. Außerdem sind Additive erforderlich und gebräuchlich, die die Verarbeitungsbedingungen des jeweiligen Systems optimieren. Als Stabilisatoren und Verarbeitungshilfsmittel eignen sich z.B. Ba/Cd-, Pb-, Sn-, Zn-Stabilisatoren oder organische Stabilisatoren sowie phenolische, gegebenenfalls S- oder P-haltige Antioxidantien, Epoxidverbindungen, Wachse, niedermolekulare und hochmolekulare Gleitmittel; solche Hilfsstoffe und deren Verarbeitungsbedingungen werden beispielsweise im "Kunststoff-Handbuch", Carl Hanser Verlag, München (1963) beschrieben.

Um den Befürfnissen mit Anforderungen von Kunststoffanwendern und -verbrauchern gerecht zu werden, müssen ständig neue, Polymerisatkombinationen und Polymeradditive entwickelt werden.

Trotz der hervorragenden Eigenschaften bekannter Polymerisatkompositionen sind immer noch spezielle anwendungstechnische Nachteile vorhanden, die ihre Verwendbarkeit einschränken.

Ein solcher Nachteil ist z.B. die unbefriedigende Fließfähigkeit, die insbesondere bei der Herstellung großformatiger Teile und von Teilen mit komplizierter Gestalt Gussfehler verursacht, die oft nur durch erhöhte Verarbeitungstemperaturen zu beheben sind. Dadurch werden aber häufig die Polymeren geschädigt; Oberflächenstörungen sind eine häufig auftretende Folge.

Es wurde nun gefunden, daß man durch Zusatz von thermoplastischen Polymeren, die eine Grenzviskosität von 2 bis 15 ml/g (gemessen in Dimethylformamid bei 25°C) und einen Schwefelgehalt von 1,15 bis 3,95 Gew.-% aufweisen, zu Formmassen auf der Basis von Vinylchloridpolymerisaten deren Gesamteigenschaften, insbesondere Verarbeitungseigenschaften, deutlich verbessern kann. Der Zusatz dieser Verbindungen führt, nicht zu Migration, Oberflächenstörungen, Ablagerungen in der Form oder Bildung von Stippen.

Gegenstand der Erfindung sind demnach Vinylchloridpolymerisat-Formmassen, die ein Polymerisat aus Styrol, α-Methylstyrol, p-Methylstyrol, Vinyltoluol, (Meth)-Acrylnitril, Methylmethacrylat oder Mischungen daraus mit einer Grenzviskosität von 2 bis 15 ml/g (gemessen in Dimethylformamid bei 25°C) das, in Gegenwart von Mercaptanen polymerisiert, einen Schwefelgehalt von 1,15 bis 3,95 Gew.-% aufweist.

Zusätzlich können die erfindungsgemäßen Formmassen enthalten (bezogen auf 100 Teile Gesamtformmasse):

A) bis 80 Gew.-Teile, vorzugsweise bis 50 Gew.-Teile und besonders bevorzugt bis 15 Gew.-Teile eines Pfropfpolymerisates, hergestellt durch Pfropfpolymerisation von Stryol, α-Methylstyrol, Methylmethacrylat, Acrylnitril, Vinylchlorid oder Mischungen daraus auf einem Kautschuk mit einer Glasüber-

gangstemperatur $T_g$ <0°C und einem mittleren Teilchendurchmesser ($d_{50}$) von 0,05 bis 10 µm, insbesondere 0,08 bis 1 µm, und/oder

B) bis 90 Gew.-Teile, vorzugsweise bis 70 Gew.-Teile und besonders bevorzugt bis 30 Gew.-Teile eines harzartigen thermoplastischen Copolymerisates aus Styrol, α-Methylstyrol, p-Methylstyrol, Vinyltoluol, Methylmethacrylat, Acrylnitril/Methacrylnitril oder Mischungen daraus mit einer Grenzviskosität ≳ 0,3 dl/g (gemessen in Dimethylformamid bei 25°C), und/oder

C) bis 50 Gew.-Teile, vorzugsweise bis 30 Gew.-Teile und besonders bevorzugt bis 20 Gew.-Teile eines Kautschuks aus der Reihe der Dienhomo- oder Diencopolymerisate, Olefinkautschuke, chlorierten Polyolefine oder Mischungen daraus, und/oder

D) bis 70 Gew.-Teile, vorzugsweise bis 60 Gew.-Teile und besonders bevorzugt bis 30 Gew.-Teile niedermolekularen und hochmolekularen Weichmacher, insbesondere Polymerweichmacher.

Vinylchloridpolymerisate im Sinne der Erfindung sind insbesondere Polyvinylchlorid und Copolymerisate des Vinylchlorids mit bis zu 50 Gew.-% copolymerisierbaren Vinylestern, Maleinsäure-anhydrid oder Halbestern der Maleinsäure.

Die erfindungsgemäß geeigneten Vinylchloridpolymerisate können nach bekannten technischen Verfahren hergestellt werden, z.B. durch Emulsions-, Suspensions- bzw. Masse-Polymerisation.

Polymerisate aus Styrol, α-Methylstyrol, p-Methylstyrol, Vinyltoluol, Acrylnitril, Methylmethacrylat oder Mischungen daraus im Sinne der Erfindung besitzen eine Grenzviskosität von 2 bis 15 ml/g (in Dimethylformamid bei 25°C) und einen Schwefelgehalt von 1,15 bis 3,95 Gew.-%.

Die der Polymerisate können durch Lösungs-, Masse-, Emulsions- oder Suspensionspolymerisation hergestellt werden, wobei bekannte oberflächenaktive Verbindungen und Initiatoren, insbesondere Radikalbildner, mitverwendet werden können. Vorzugsweise werden die Polymerisate durch Emulsionspolymerisation hergestellt. Dabei werden die Monomeren in Gegenwart von Mercaptanen in bestimmten Mengenverhältnissen polymerisiert. Beispiele für geeignete Mercaptane sind Ethylmercaptan, n-Propylmercaptan, n-Butylmercaptan, tert.-Butylmercaptan, n-Pentylmercaptan, n-Hexylmercaptan, n-Octylmercaptan, n-Decylmercaptan, n-Dodecylmercaptan, tert.-Dodecylmercaptan, n-Hexadecylmercaptan und n-Octadecylmercaptan.

Bevorzugt sind solche Polymerisate, die durch Polymerisation eines Gemisches aus 50 bis 80 Gew.-Teilen Styrol und/oder α-Methylstyrol, 10 bis 30 Gew,-Teilen Acrylnitril und 7,5 bis 25 Gew.-Teilen tert.-Dodecylmercaptan hergestellt worden sind.

Die Polymerisate können nach bekannten Verfahren aufgearbeitet werden, z.B. durch Sprühtrocknung oder Elektrolytkoagulation an den Latices isoliert werden; die anfallenden Latices können aber auch mit Latices anderer erfindungsgemäßer Mischungsbestandteile vermischt und gemeinsam koaguliert werden.

Geeignete Pfropfpolymerisate (A) sind Produkte, die durch Pfropfpolymerisation von Styrol, α-Methylstyrol, Methylmethacrylat, Vinylchlorid oder Mischungen daraus auf eine Kautschuk (Pfropfgrundlage) mit einer Glasübergangstemperatur <0°C erhalten werden. Bevorzugte Pfropfprodukte besitzen Kautschukgehalte von 20 bis 80 Gew.-%.

Beispiele für geeignete Pfropfgrundlagen sind Polybutadien, Polyisopren, Styrol-Butadien-Copolymerisate, Acrylnitril-Butadien-Copolymerisate, Acrylatkautschuke, EPM-Kautschuke (Ethylen/Propylen-Kautschuke) und EPDM- Kautschuke, (Ethylen/Propylen/Dien-Kautschuke, die als Dien ein nicht-konjugiertes Dien wie z.B. Hexadien-1,5 oder Norbornadien in kleinen Mengen enthalten).

Bevorzugte Pfropfpolymerisate sind solche von Styrol/Acrylnitril-Gemischen auf Polybutadien (ABS-Polymerisate), von Styrol/Methylmethacrylat-Gemischen auf Polybutadien und von Styrol/Acrylnitril-Gemischen auf Acrylatkautschuk (ASA-Polymere).

Zur Herstellung der Pfropfpolymerisate können Emulsions-, Suspension- oder Fällungspolymerisation angewandt werden. Besonders geeignet ist Emulsionspolymerisation oder eine Kombination von Emulsions- und Suspensionspolymerisation. Im Anschluß an die Pfropfpolymerisationen können gegebenenfalls Antioxidantien (z.B. vom Phenoltyp) zugesetzt werden. Pfropfpolymerisate im Sinne der Erfindung sind bekannt.

Geeignete harzartige thermoplastische Copolymerisate (B) sind z.B. Styrol/Acrylnitril-Copolymerisate, α-Methylstyrol/Acrylnitril-Copolymerisate, Methylmethacrylat/-Acrylnitril-Copolymere, die gegebenenfalls kleinere Anteile von weiteren Monomeren, wie z.B. Methacrylsäureester von $C_{2-8}$-Alkoholen oder Acrylsäureester von $C_{1-6}$ Alkoholen, eingebaut enthalten können.

Die Copolymerisate B können durch Lösungs-, Masse-, Emulsions- oder Suspensionspolymerisation in Gegenwart bekannter oberflächenaktiver Substanzen und Initiatoren, insbesondere Radikalbildnern, hergestellt werden. Man kann solche Polymere entweder aus dem anfallenden Latex isolieren (z.B. durch Sprühtrocknung oder Elektrolytkoagulation) oder die anfallenden Latices mit anderen Latices der erfindungsgemäßen Mischungsbestandteile mischen und gemeinsam koagulieren. Die thermoplastischen Polymerisate (B) sind bekannt.

Als Komponente (C) können Butadiencopolymer-Kautschuke wie z.B. Butadien/Acrylnitril-Copolymere, Ethylen-Vinylacetat- oder Ethylen-Acrylester-Copolymerisate, Ethylen-Vinylacetat-Kohlenmonoxid-Terpolymere oder chlorierte Polyolefine wie z.B. chloriertes Polyethylen verwendet werden.

Die Kautschuke können durch Emulsionspolymerisation, die Ethylenpolymerisate durch alle bekannten Verfahren wie Lösungspolymerisation in organischen Medien, Massepolymerisation, Emulsionspolymerisation oder Fällungspolymerisation gewonnen werden.

Als Weichmacher (D) sind beispielsweise niedermolekulare Verbindungen wie Phosphate, Phthalate, Adipate oder Sebazate oder hochmolekulare Verbindungen wie Polyesterweichmacher, Adipat-Carbonat-Mischester oder elastomere Polyurethane geeignet.

Die erfindungsgemäßen Formmassen können nach üblichen Methoden der Polyvinylchloridverarbeitung verarbeitet werden, beispielsweise durch Spritzguß, Extrusion, Hohlkörperblasen, Tiefziehen oder Kalandrieren.

Wie aus den nachfolgenden Beispielen hervorgeht, besitzen die erfindungsgemäßen Formmassen eine wesentlich verbesserte Verarbeitbarkeit.

Dabei werden die Nachteile, die beim Zusatz von die Verarbeitbarkeit verbessernden Additiven aufgetreten sind, wie Ausschwitzen der Additive, leichte Flüchtigkeit unter Ausbildung von Belägen (sogenanntes "Fogging") und Migration der Additive bei Kontakt mit organischen Medien sowie negative Verschlechterung der mechanischen Eigenschaften nicht auf.

Die Grenzviskositäten wurden in dem jeweils angegebenen Lösungsmittel bestimmt.

Zur Definition von Staudinger-Index und Gelgehalt siehe: M. Hoffman, H. Krömer, R. Kuhn, "Polymeranalytik I und II" Georg-Thieme Verlag, Stuttgart (1977).

Die Pfropfkautschuk-Teilchendurchmesser sind $d_{50}$-Werte (zur Definition siehe Ultrazentrifugen-Messungen: W. Scholtan, H. Lange, Kolloidz. und Z. Polymere $\underline{250}$ (1972), 782-796).

Beispiele

1. Eingesetzte Produkte

1.1 Polyvinylchlorid mit einem K-Wert von 70

1.2 Diisodecylphthalat

1.3 ABS-Pfropfpolymerisat aus 30 Gew.-Teilen eines Polybutadiens mit mittleren Teilchendurchmessern von 0,4 µm ($d_{50}$-Wert) und 70 Gew.-Teilen eines SAN-Harzes mit 34 Gew.-% Acrylnitril

1.4 ABS-Pfropfpolymerisat aus 87 Gew.-Teilen eines α-Methylstyrol-Acrylnitril-Copolymerisates mit 31 Gew.-% Acrylnitril und 13 Gew.-Teilen eines Pfropfpolymerisates aus 50 % einer feinteiligen Komponente mit mittleren Teilchengrößen von 0,1 µm ($d_{50}$-Wert) und 50 % einer grobteiligen Komponente mit mittleren Teilchengrößen von 0,4 µm ($d_{50}$-Wert), wobei das Pfropfpolymerisatgemisch aus 50 Gew.-% eines SAN-Harzes mit einem Acrylnitrilgehalt von 28 Gew.-% aufgebaut ist.

1.5 ABS-Pfropfpolymerisat entsprechend 1.4), wobei der Anteil der α-Methylstyrol-Acrylnitril-Copolymerisat-Komponente 67 Gew.-Teile beträgt.

1.6 Erfindungsgemäße schwefelhaltige Harzkomponente 3,06 Teile Styrol, 1,19 Teile Acrylnitril und 0,75 Teile tert.-Dodecylmercaptan werden unter Stickstoff zusammen mit 0,08 Teilen des Natriumsalzes der disproportionierten Abietinsäure in 68 Teilen Wasser emulgiert, wonach 0,3 Teile Kaliumpersulfat (gelöst in 24 Teilen Wasser) zugegeben werden und die Mischung auf 65°C erwärmt wird. Danach werden im Laufe von 4 h eine Mischung aus 58,14 Teilen Styrol, 22,61 Teilen Acrylnitril und 14,25 Teilen tert.-Dodecylmercaptan sowie eine Lösung von 1,92 Teilen des Natriumsalzes der disproportionierten Abietinsäure in 25 Teilen Wasser zudosiert, wobei die Reaktionstemperatur von 65°C beibehalten wird. Nach einer Nachreaktionszeit wird der Latex mit einer kalten Magnesiumsulfat/Essigsäure-Lösung koaguliert. Das nach Trocknung bei 70°C im Vakuum in einer Ausbeute von 97 % erhaltene Polymerisat besitzt einen Schwefelgehalt von 2,3 % und eine Grenzviskosität von 6,7 ml/g (in Dimethylformamid bei 25°C).

1.7 ABS-Pfropfpolymerisat aus 75 Gew.-Teilen eines Polybutadiens mit mittleren Teilchendurchmessern von 0.4 µm ($d_{50}$-Wert) und 25 Gew.Teilen eines SAN-Harzes mit 28 Gew.-% Acrylnitril.

1.8 Thermoplastharz-Copolymerisat aus 69 Gew.-Teilen α-Methylstyrol und 31 Gew.-Teilen Acrylnitril mit einem Staudinger-Index von 0,59 dl/g (DMF, bei 25°C).

1.9 Butadien-Acrylnitril-Copolymerkautschuk mit einem Acrylnitrilgehalt von 30 Gew.-% und einem Gelgehalt von 60 Gew.-%.

1.10 SAN-Harz mit einem Acrylnitrilgehalt von 26 Gew.-% und einem Staudinger-Index von 6 dl/g, gemessen in DMF bei 25°C.

1.11 Polymethylmethacrylat mit einem Staudinger-Index von 1,5 dl/g, gemessen in DMF bei 25°C.

2. Formkörperherstellung

Die Komponenten werden in den in den Tabellen angegebenen Gewichtsverhältnissen auf einer Walze bei 180 bis 190°C gemischt (innerhalb von 15 min.) und anschließend bei einer Temperatur von 190°C zu Formkörpern gepreßt.

Tabelle 1

| Lfd. Nr. | Rezeptur | Gew.-Tl. | Zugfestigkeit | Dehnung | Weiterreißfestigkeit | Vicat A | MFI-Wert |
|---|---|---|---|---|---|---|---|
| 1[1] | 1.1) | 40 | 20,9 | 155 | 87,9 | 57 | 15,0 |
| | 1.2) | 20 | | | | | |
| | 1.3) | 40 | | | | | |
| 2[2] | 1.1) | 40 | 22,6 | 175 | 89,0 | 58 | 19,4 |
| | 1.2) | 20 | | | | | |
| | 1.3) | 38,8 | | | | | |
| | 1.6) | 2,4 | | | | | |

Alle Compounds enthalten als Stabilisatoren 1,5 Gew.-Tl. ®Irgastab 17 M (Ciba-Geigy, Marienburg GmbH) und als Gleitmittel 0,2 Gew.-Tl. ®Loxiol G 70 (Henkel & Cie)

MFI: Melt Flow Index
[1] Vergleichsversuch
[2] Erfindungsgemäße Komposition

Wie aus Tabelle 1 hervorgeht, besitzt Formmasse 2 mit dem erfindungsgemäßen Additiv 1.6 bessere Fließeigenschaften als die Vergleichs-Formmasse 1.

Tabelle 2

| Lfd. Nr. | Rezeptur | Gew.-Tl. | Kugeldruckhärte | Kerbschlagzähigkeit | Vicat A |
|---|---|---|---|---|---|
| 3[1] | 1.1) | 45 | 84,2 | 4,0 | 90 |
| | 1.7) | 11 | | | |
| | 1.8) | 44 | | | |
| 4[2] | 1.1) | 45 | 86 | 3,5 | 89 |
| | 1.7) | 11 | | | |
| | 1.8) | 39 | | | |
| | 1.6) | 5 | | | |
| 5[2] | 1.1) | 45 | 85,6 | 2,9 | 86 |
| | 1.7) | 11 | | | |
| | 1.8) | 34 | | | |
| | 1.6) | 10 | | | |
| 6[2] | 1.1) | 45 | 86,9 | 2,5 | 82 |
| | 1.7) | 11 | | | |
| | 1.8) | 29 | | | |
| | 1.6) | 15 | | | |

Alle Formmassen enthalten als Additive
2 Gew.-Teile ®Irgastab T 22 M (Ciba-Geigy, Marienburg GmbH)
1 Gew.-Teil Hoechst-OP-Wachs (Hoechst AG, Augsburg)
5 Gew.-Teile ®Loxiol G 60 (Henkel & Cie, Düsseldorf)
3 Gew.-Teile ®Loxiol G 31 (Henkel & Cie, Düsseldorf)
3 Gew.-Teile Antimontrioxid
3 Gew.-Teile ®Bayertitan R-FKD (Bayer AG, Dormagen)

Von den Formmassen 3 bis 6 wurden Fließkurven aufgenommen.

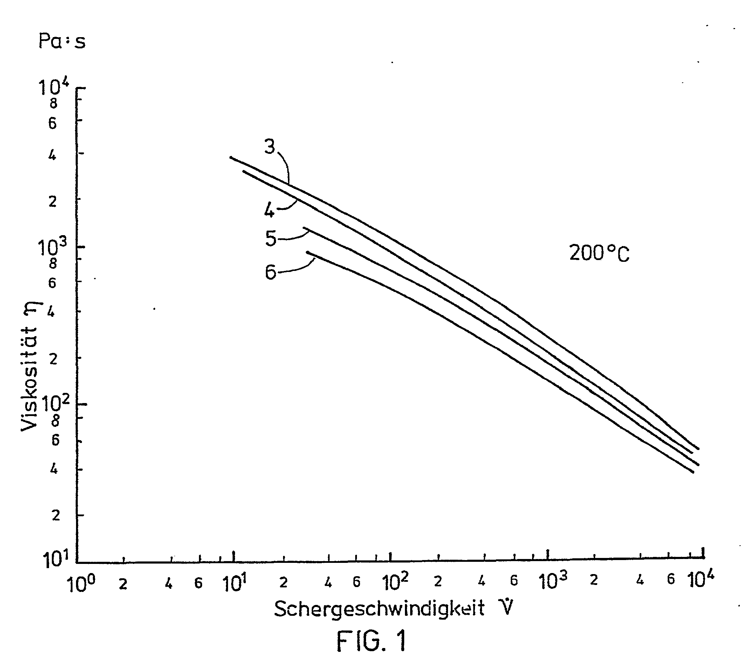

Die Ergebnisse sind in Figur 1 wiedergegeben. Aus der Figur 1, in der die Schergeschwindigkeit $v$ gegen die Viskosität $\eta$ aufgetragen ist, geht hervor, daß Formmassen in Abhängigkeit von der Menge des zugesetzten Additives 1.6) bessere rheologische Eigenschaften aufweisen.

Tabelle 3

| Lfd. Nr. | Rezeptur | Gew.-Tl. | Zugfestigkeit | Dehnung | Weiterreißfestigkeit | Vicat A | MFI-Wert |
|---|---|---|---|---|---|---|---|
| | 1.1) | 50 | | | | | |
| | 1.3) | 40 | | | | | |
| | 1.9) | 20 | | | | | |
| | 1.2) | 25 | | | | | |
| | plus: | | | | | | |
| 7[1] | 1.8) | 10 | 22,5 | 237 | 71,9 | 80 | 9,5 |
| 8[1] | 1.8) | 7 | 22,4 | 240 | 69,1 | 79 | 8,9 |
| | 1.10) | 3 | | | | | |
| 9[1] | 1.8) | 7 | 22,7 | 249 | 75,5 | 79 | 8,3 |
| | 1.11) | 3 | | | | | |
| 10[2] | 1.8) | 7 | 20 | 226 | 75 | 79 | 11,2 |
| | 1.6) | 3 | | | | | |

Alle Formmassen enthalten als Additive
3 Gew.-Teile ®Bärostab ZPS7B (Chem. Werke, Minden, Otto Bärlöcher GmbH, München)
0,2 Gew.-Teile ®Loxiol G 70 (Henkel & Cie, Düsseldorf)
®Bärostab ZPS7B
®Loxiol G 70

In Tabelle 3 wird das erfindungsgemäße Additiv 1.6 mit bekannten anderen Verarbeitungshilfsmitteln verglichen (1.10 und 1.11).

Aus den Meßwerten ist ersichtlich, daß das Additiv 1.6 überraschenderweise den Schmelzfluß (MFI-Wert) am stärksten positiv beeinflußt, bei einem guten Gesamtniveau der restlichen Formkörpereigenschaften.

Zugfestigkeit nach DIN 53 455 (MPa)
Dehnung nach DIN 53 455 (%)
Weiterreißfestigkeit nach DIN 53 515 (N/mm)
Vicat A nach DIN 53 460 (°C)
MFI-WERT 190°C/21,6 kg nach DIN 53 735 (g/10 min)
Kugeldruckhärte nach DIN 53 456 (MPa 30")
Kerbschlagzähigkeit nach DIN 53 453 (kJ/m$^2$)

**Patentansprüche**

1. Vinylchloridpolymer-Formmassen enthaltend ein thermoplastisches Polymer aus Styrol, α-Methylstyrol, p-Methylstyrol, Vinyltoluol, (Meth)-Acrylnitril, Methylmethacrylat oder Mischungen daraus mit einer Grenzviskosität von 2 bis 15 ml/g (gemessen in Dimethylformamid bei 25°C), das, in Gegenwart von Mercaptanen polymerisiert, einen Schwefelgehalt von 1,15 bis 3,95 Gew.-% aufweist.

2. Formmassen nach Anspruch 1, enthaltend zusätzlich

A) bis 80 Gew.-Teile, vorzugsweise bis 50 Gew.-Teile und besonders bevorzugt bis 15 Gew.-Teile eines Pfropfpolymerisates, hergestellt durch Pfropfpolymerisation von Styrol, α-Methylstyrol, Methylmethacrylat, Acrylnitril, Vinylchlorid oder Mischungen daraus auf einem Kautschuk mit einer Glasübergangstemperatur $T_g$ < 0°C und einem mittleren Teilchendurchmesser ($d_{50}$) von 0,05 bis 10 μm, insbesondere 0,08 bis 1 μm, und/oder

B) bis 90 Gew.-Teile, vorzugsweise bis 70 Gew.-Teile und besonders bevorzugt bis 30 Gew.-Teile eines harzartigen thermoplastischen Copolymerisates aus Styrol, α-Methylstyrol, p-Methylstyrol, Vinyltoluol, Methylmethacrylat, Acrylnitril/Methacrylnitril oder Mischungen daraus mit einer Grenzviskosität ≥ 0,3 dl/g (gemessen in Dimethylformamid bei 25°C), und/oder

C) bis 50 Gew.-Teile, vorzugsweise bis 30 Gew.-Teile und besonders bevorzugt bis 20 Gew.-Teile eines Kautschuks aus der Reihe der Dienhomo- oder Diencopolymerisate, Olefinkautschuke, chlorierten Polyolefine oder Mischungen daraus, und/oder

D) bis 70 Gew.-Teile, vorzugsweise bis 60 Gew.-Teile und besonders bevorzugt bis 30 Gew.-Teile niedermolekularen und hochmolekularen Weichmacher, insbesondere Polymerweichmacher.

3. Formmassen nach Anspruch 1 und/oder 2, enthaltend einen niedermolekularen Weichmacher.

**Claims**

1. Polyvinyl chloride molding compounds containing a thermoplastic polymer of styrene, a-methyl styrene, p-methyl styrene, vinyl toluene, (meth)acrylonitrile, methyl methacrylate or mixtures thereof having an intrinsic viscosity of 2 to 15 ml/g which, polymerized in the presence of mercaptans, has a sulfur content of 1.15 to 3.95% by weight.

2. Molding compounds as claimed in claim 1 additionally containing

A) up to 80 parts by weight, preferably up to 50 parts by weight and, more preferably, up to 15 parts by weight of a graft polymer prepared by graft polymerization of styrene, $\alpha$-methyl styrene, methyl methacrylate, acrylonitrile, vinyl chloride or mixtures thereof on a rubber having a glass transition temperature $T_g$ of < 0°C and a mean particle diameter ($d_{50}$) of 0.05 to 10 µm and more especially 0.08 to 1 µm and/or

B) up to 90 parts by weight, preferably up to 70 parts by weight and, more preferably, up to 30 parts by weight of a resin-like thermoplastic copolymer of styrene, $\alpha$-methyl styrene, p-methyl styrene, vinyl toluene, methyl methacrylate, acrylonitrile/methacrylonitrile or mixtures thereof having an intrinsic viscosity of $\geq 0.3$ dl/g (as measured in dimethyl formamide at 25°C) and/or

C) up to 50 parts by weight, preferably up to 30 parts by weight and, more preferably, up to 20 parts by weight of a rubber from the series of diene homopolymers or diene copolymers, olefin rubbers, chlorinated polyolefins or mixtures thereof and/or

D) up to 70 parts by weight, preferably up to 60 parts by weight and, more preferably, up to 30 parts by weight low molecular weight and high molecular weight plasticizers, more especially polymeric plasticizers.

3. Molding compounds as claimed in claim 1 and/or 2 containing a low molecular weight plasticizer.

**Revendications**

1. Compositions à mouler à base de polymères de chlorure de vinyle, contenant un polymère thermoplastique de styrène, d'α-méthylstyrène, de p-méthylstyrène, de vinyltoluène, de (méth)-acrylonitrile, de méthacrylate de méthyle ou de leurs mélanges ayant une viscosité limite de 2 à 15 ml/g, mesurée dans du diméthylformamide à 25°C, qui, polymérisé en présence de mercaptans, présente une teneur en soufre de 1,15 à 3,95% en poids.

2. Compositions à mouler suivant la revendication 1, contenant en outre

A) jusqu'à 80 parties en poids, de préférence jusqu'à 50 parties en poids et notamment jusqu'à 15 parties en poids d'un polymérisat greffé, préparé par polymérisation de greffage de styrène, d'α-méthylstyrène, de méthacrylate de méthyle, d'acrylonitrile, de chlorure de vinyle ou de leurs mélanges sur un caoutchouc ayant une température $T_g$ de transition vitreuse inférieure à 0°C et un diamètre moyen ($d_{50}$) des particules de 0,05 à 10 µm, notamment de 0,08 à 1 µm, et/ou

B) jusqu'à 90 parties en poids, de préférence jusqu'à 70 parties en poids et notamment jusqu'à 30 parties en poids d'un copolymérisat thermoplastique, analogue à une résine, de styrène, d'α-méthylstyrène, de p-méthylstyrène, de vinyltoluène, de méthacrylate de méthyle, d'acrylonitrile/méthacrylonitrile ou de leurs mélanges, ayant une viscosité limite égale ou supérieure à 0,3 dl/g (mesurée dans le diméthylformamide à 25°C), et/ou

C) jusqu'à 50 parties en poids, de préférence jusqu'à 30 parties en poids et notamment jusqu'à 20 parties en poids d'un caoutchouc de la série des homopolymérisats ou des copolymérisats diéniques, des caoutchoucs oléfiniques, des polyoléfines chlorées ou leurs mélanges, et/ou

D) jusqu'à 70 parties en poids, de préférence jusqu'à 60 parties en poids et notamment jusqu'à 30 parties en poids de plastifiants de bas poids moléculaire et de haut poids moléculaire, notamment de plastifiants polymériques.

3. Compositions à mouler suivant la revendication 1 et/ou la revendication 2, contenant un plastifiant de bas poids moléculaire.

FIG. 1